# FASCICULE DE BREVET EUROPEEN

(11) **EP 2 509 805 B1**
(45) Date de publication et mention de la délivrance du brevet: **26.02.2014**
(21) Numéro de dépôt: 10784819.4
(22) Date de dépôt: 03.12.2010
(51) Int. Cl.: B60C 11/14, B60C 11/03

(54) **BANDE DE ROULEMENT DE PNEUMATIQUE RENFORCEE PAR DE COURTES FIBRES ORIENTEES ET CROISEES ENTRE ELLES**
MIT KURZEN AUSGERICHTETEN UND KREUZWEISE ANGEORDNETEN FASERN VERSTÄRKTES REIFENPROFIL
TIRE TREAD REINFORCED WITH SHORT ORIENTED AND CROSSED FIBERS

(30) Priorité: 08.12.2009 FR 0958729
(43) Date de publication de la demande: 17.10.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BOURNAT, Alexis, 63000 Clermont-Ferrand (FR); CORSI, Patrick, 63260 Thuret (FR)
(74) Mandataire: Diernaz, Christian
(86) Numéro de dépôt international: PCT/EP2010/068881
(87) Numéro de publication internationale: WO 2011/069924

(56) Documents cités:
- WO-A1-2008/027045

## Description

La présente invention a pour objet une amélioration des bandes de roulement pour des pneumatiques destinés à équiper des véhicules poids lourd ; elle concerne en particulier la sculpture de ces bandes de roulement.

Cette invention est notamment, mais pas exclusivement, destinée à être mise en oeuvre pour des pneumatiques à carcasse radiale et destinés aux essieux directeurs des véhicules poids lourd. Elle peut cependant également être utilisée pour des essieux non directeurs de véhicules poids lourd ainsi que pour des véhicules hors la route tels que des engins agricoles (forestiers) ou pour des engins de génie civil.

De tels pneumatiques comportent en règle générale une armature de carcasse surmontée radialement à l'extérieur par une ceinture de sommet, elle-même recouverte d'une bande de roulement. Cette bande de roulement est pourvue d'une sculpture formée essentiellement de nervures d'orientation générale circonférentielle délimitées par des rainures de même orientation ou de blocs délimités par des rainures circonférentielles et des rainures transversales ou d'une combinaison de blocs et de nervures. Axialement une bande de roulement est délimitée par des nervures de bord.

### État de la technique

Dans le cas de pneumatiques destinés au segment régional (roulage sur des routes régionales, courtes et moyennes distances) possédant une sculpture de bande de roulement présentant des nervures et des rainures d'orientation circonférentielle, on peut constater une sensibilité à l'arrachement des bords des nervures de bord en fonction des conditions de roulage et d'utilisation. De telles conditions sont obtenues notamment lors de sollicitations sévères telles que par exemple la montée ou la descente de trottoirs lors de livraisons de marchandises ou lors de chocs contre des trottoirs ou des obstacles ou corps étrangers présents sur la chaussée ou sur le terrain. Cette sensibilité à l'arrachement est en partie dépendante de la nature de la gomme qui constitue la nervure de bord et elle est souvent plus prononcée lorsque la gomme utilisée est un coupage de caoutchouc naturel avec un ou plusieurs caoutchoucs synthétiques bénéfique pour une usure réduite de la bande de roulement.

Pour empêcher l'apparition d'arrachements comme indiqués ci-dessus et limiter le cisaillement induit par de telles sollicitations, diverses solutions ont été proposées qui généralement visent à réduire le rapport d'aspect de la nervure de bord, c'est-à-dire le rapport hauteur/largeur de cette nervure, en augmentant la largeur de ladite nervure de bord. Une telle modification géométrique présente l'inconvénient de devoir redéfinir la totalité de la sculpture de la bande de roulement.

La présente invention propose de résoudre le problème technique exposé en permettant d'éviter ou tout au moins de retarder et limiter fortement les arrachements de gomme des nervures de bord, voire la blessure en fond de creux d'une rainure d'orientation générale circonférentielle, pouvant résulter de la sollicitation sévère telle qu'une montée ou une descente d'un trottoir ou un choc contre un trottoir ou d'autres obstacles présents sur la chaussée ou la surface de roulement sans modifier la géométrie de la bande de roulement.

Pour résoudre le problème technique sans modifier la sculpture de la bande de roulement, l'invention propose d'augmenter le module de cisaillement du matériau élastomérique qui constitue la bande de roulement du pneumatique d'un facteur au moins égal à trois en renforçant la gomme par de courtes fibres orientées sensiblement à +/- 45° par rapport à une direction radiale de l'enveloppe de pneumatique et la transformant ainsi en un matériau composite stratifié.

L'addition de courtes fibres de diverses natures à des compositions de caoutchouc destinées à des bandes de roulement pour pneumatiques est bien connue. Le brevet US 1746948 décrit une bande de roulement de pneumatique à carcasse croisée comprenant une nappe élastomérique comportant de longues fibres textiles enroulées autour d'une âme en caoutchouc, ces longues fibres étant inclinées par rapport à la surface de la bande de roulement et affleurent à ladite surface de roulement pour constituer des points d'accrochage à la chaussée et ainsi éviter ou retarder le dérapage du pneumatique sur chaussée humide ou glissante.

Le brevet US 3057389 décrit une bande de roulement de pneumatique de tourisme ou de pneu avion à carcasse croisée comportant des rainures d'orientation générale longitudinale et un relief continu dans le sens circonférentiel, la gomme constituant la totalité de la bande de roulement étant constituée par un empilement de nappes de caoutchouc renforcées de courtes fibres textiles parallèles les unes aux autres pour augmenter la résistance du pneumatique aux forces centrifuges tendant à provoquer sa destruction à haute vitesse. Les courtes fibres orientées parallèlement entre elles peuvent être disposées dans le sens circonférentiel dans un plan parallèle à un plan tangent à la surface de roulement et dans la direction OX (OX étant la direction circonférentielle) ou être croisées entre elles dans un plan parallèle à un plan tangent à la surface de roulement et dans la direction OY (OY étant la direction de l'axe de rotation) ou les courtes fibres orientées parallèlement entre elles et disposées dans le sens circonférentiel dans un plan parallèle à un plan tangent à la surface de roulement et dans la direction OX peuvent être comprises entre deux nappes de courtes fibres croisées entre elles dans un plan parallèle à un plan tangent à la surface de roulement et dans la direction OY respectivement disposées au-dessus et en dessous de la nappe comprenant les courtes fibres orientées circonférentiellement.

La demande de brevet WO 2008/027045-Al décrit une bande de roulement pour pneumatique de tourisme et pour pneu poids lourd comportant des rainures d'orientation générale longitudinale et un relief continu dans le sens circonférentiel et enseigne que l'utilisation pour la gomme constituant les nervures circonférentielles continues de nappes ou fines couches de caoutchouc renforcées de courtes microfibres de verre parallèles entre elles et soit orientées circonférentiellement dans la direction OX, soit orientées dans un plan YOZ (c'est-à-dire dans un plan perpendiculaire à la surface de roulement de la bande de roulement contenant une direction parallèle à la direction de l'axe de rotation et une direction perpendiculaire à l'axe de rotation orientée selon l'épaisseur du relief dans la direction OZ), soit orientées transversalement dans une direction OY, soit orientées substantiellement à + 45° ou - 45° dans un plan XOZ, soit orientées à 45° dans un plan XOY, permet d'obtenir un bon compromis de propriétés, à savoir une rigidité augmentée sans pénaliser, voire même améliorer, les propriétés hystérétique et d'élongation et de résistance à l'usure.

L'invention a pour objet une bande de roulement de pneumatique pourvue d'une surface de roulement destinée à être en contact avec une chaussée, cette bande de roulement comportant une sculpture formée par des éléments de relief séparés les uns des autres par des rainures, cette bande de roulement étant formée par une gomme constituée de fines couches de caoutchouc empilées les unes contre les autres, chaque fine couche comprenant de courtes fibres de renforcement parallèles entre elles dans la couche et orientées unidirectionnellement dans le plan de la couche selon un même angle. La bande de roulement est caractérisée en ce que les fines couches sont empilées les unes contre les autres de façon que les courtes fibres soient croisées entre elles d'une couche à la suivante.

Les courtes fibres de renforcement sont ainsi alternativement orientées symétriquement d'une couche à la couche adjacente dans la direction circonférentielle selon un angle allant en valeur absolue de 10° à 80° par rapport à une direction radiale dans le plan de la couche. Selon une forme d'exécution avantageuse de l'invention, les courtes fibres sont orientées selon un angle allant en valeur absolue de 30° à 60° par rapport à une direction radiale dans le plan de la couche. Selon une variante d'exécution, l'orientation des courtes fibres de renforcement peut varier dans le plan de croisement et ne pas être symétrique. De même une variation de l'angle de croisement peut également être réalisée dans le sens circonférentiel (dans une direction tangente à la direction circonférentielle).

Selon une forme d'exécution préférentielle de l'invention, les courtes fibres de renforcement sont alternativement orientées d'une couche à la couche adjacente circonférentiellement selon un angle sensiblement de + 45° et de - 45° sur toute la largeur de la bande de roulement. Par "sensiblement" égal à une valeur angulaire, il faut comprendre un angle pouvant être différent de cette valeur angulaire d'au plus 3° en valeur absolue.

Selon une autre forme d'exécution de l'invention, chaque couche fine renforcée de courtes fibres est inclinée par rapport à une direction radiale (direction perpendiculaire à la surface de roulement) d'un angle au plus égal à 45°.

Selon une autre forme d'exécution de l'invention, il est possible de ne renforcer que partiellement la bande de roulement sur une partie de sa largeur, préférentiellement les parties latérales proches des bords axiaux du pneu.

A titre de courtes fibres de renforcement utilisables selon l'invention, conviennent les fibres organiques naturelles ou synthétiques ou inorganiques connues de l'homme du métier et disponibles dans le commerce telles que par exemple les fibres en coton, rayonne, cellulose, des fibres en polyamides aromatiques telles que des fibres en aramide comme par exemple des fibres en Kevlar® commercialisées par la société Dupont de Nemours, en polyamides aliphatiques telles que le nylon 46 et 66, en polyester, en polyéthylène téréphtalate (PET), en polyéthylène naphtalates (PEN), en polyimides, en polyvinyalcools, des fibres de carbone, des fibres de verre. Selon une forme d'exécution préférentielle de l'invention, les courtes fibres de renforcement sont en aramide. Peuvent également convenir des fils métalliques de courte longueur.

Les fibres de renforcement peuvent avoir une longueur égale ou inférieure à 10 mm, avantageusement allant de 5µm à 10 mm et préférentiellement allant de 3 mm à 8 mm, un diamètre moyen allant de 0,2 µm à 0,1 mm, leur section peut être circulaire ou non, elles peuvent ou non être creuses. La teneur en fibres dans la gomme constituant chaque couche de fibres orientées peut aller de 0.1% à 45% en poids du caoutchouc et préférentiellement aller de 0.5% à 10% en poids du caoutchouc.

Dans la présente description, tous les pourcentages (%) sont des pourcentages exprimés en masse. D'autre part, tout intervalle de valeurs désigné par l'expression "entre a et b" représente le domaine de valeurs supérieures à la valeur a et inférieures à la valeur b (c'est-à-dire bornes a et b exclues) tandis que tout intervalle de valeurs désigné par l'expression "de a à b" représente le domaine de valeurs allant de la valeur a jusqu'à la valeur b et incluant les bornes a et b.

Les pneumatiques comportant une bande de roulement selon l'invention sont préférentiellement à armature de carcasse radiale et particulièrement destinés à équiper les essieux directeurs des véhicules poids lourd prévus pour un usage lié à un marché régional de livraison de marchandises. Ils peuvent également être utilisés pour des essieux non directeurs de véhicules poids lourd (tracteurs et remorques), pour des véhicules hors la route tels qu'engins agricoles (forestiers) ou d'engins de génie civil opérant très souvent sur des terrains comportant de nombreux obstacles ou des corps étrangers à franchir et soumettant les pneumatiques a de grandes forces de cisaillement ou d'autres véhicules de transport ou de manutention.

Pour préparer la couche élastomérique contenant les courtes fibres de renforcement orientées unidirectionnellement selon l'angle choisi, on peut utiliser tout procédé connu en soi, notamment comme décrit par exemple dans la demande de brevet WO 2008/027045. Une telle couche élastomérique peut être utilisée pour la fabrication de bandes de roulement destinées à la fabrication de pneus neufs ou au rechapage de pneus usagés.

L'invention a également pour objet une enveloppe de pneumatique comportant une bande de roulement de pneumatique présentant les caractéristiques définies ci-dessus.

Une forme avantageuse de réalisation d'une enveloppe de pneumatique comprenant une bande de roulement conforme à l'invention consiste, grâce à un calandrage mettant en oeuvre un outil à cylindres, à réaliser des plaques d'élastomère non vulcanisé contenant les courtes fibres de renforcement, puis à découper ces plaques et à les extruder au moyen d'une micro buse pour réaliser des bandelettes d'élastomère dans lesquelles les courtes fibres de renforcement sont orientées dans le sens de l'extrusion. La bande de roulement est ensuite obtenue par superposition sur un tambour de confection rotatif de plusieurs couches, préférentiellement quatre, de bandelettes juxtaposées puis alternativement disposées à + (plus) ou - (moins) 45° ; cet empilement est ensuite découpé dans le sens circonférentiel pour réaliser un nombre de profilés de produits semi-finis correspondant au nombre (n) de nervure(s) d'orientation générale circonférentielle renforcée(s) choisi pour le(s) élément(s) en relief de la bande de roulement, lesquels profilés sont jointivement disposés sur le bandage cru lui même disposé sur le tambour de confection du pneumatique.

Les variantes qui ont été décrites précédemment peuvent aisément être combinées entre elles par la personne du métier recherchant une amélioration de la performance en résistance aux arrachements dus à des sollicitations sévères telles que celles subies lors de la montée ou la descente de trottoirs ou dus à des chocs contre le trottoir ou à des corps étrangers d'un pneumatique notamment d'un pneumatique poids-lourd à carcasse radiale.

D'autres caractéristiques et avantages de l'invention ressortent de la description faite ci-après en référence aux dessins annexés qui montrent, à titre d'exemples non limitatifs, plusieurs formes de réalisation de l'objet de l'invention.

La figure 1 montre deux fines couches chaque couche comprenant des fibres orientées soit avec un angle soit avec l'angle opposé (on note cet empilement de la façon suivante couche + et couche -) ;

La figure 2 montre une vue partielle d'une sculpture d'une bande de roulement de pneumatique selon l'invention pour laquelle l'ensemble de la bande est formé par une pluralité de fines couches + et - ;

La figure 3 montre une vue en plan d'une bande de roulement selon l'invention selon laquelle seules les parties de bord sont renforcées de fines couches ;

La figure 4 montre une variante de bande de roulement selon l'invention dont les blocs sont formés de fines couches.

### Description des figures

Pour faciliter la lecture des figures les mêmes références sont utilisées pour désigner des éléments structurels ou fonctionnels identiques. En outre, un signe + est porté sur une couche renforcée par des fibres courtes orientées selon un angle positif et un signe - est porté sur une couche renforcée par des fibres courtes orientées selon un angle négatif.

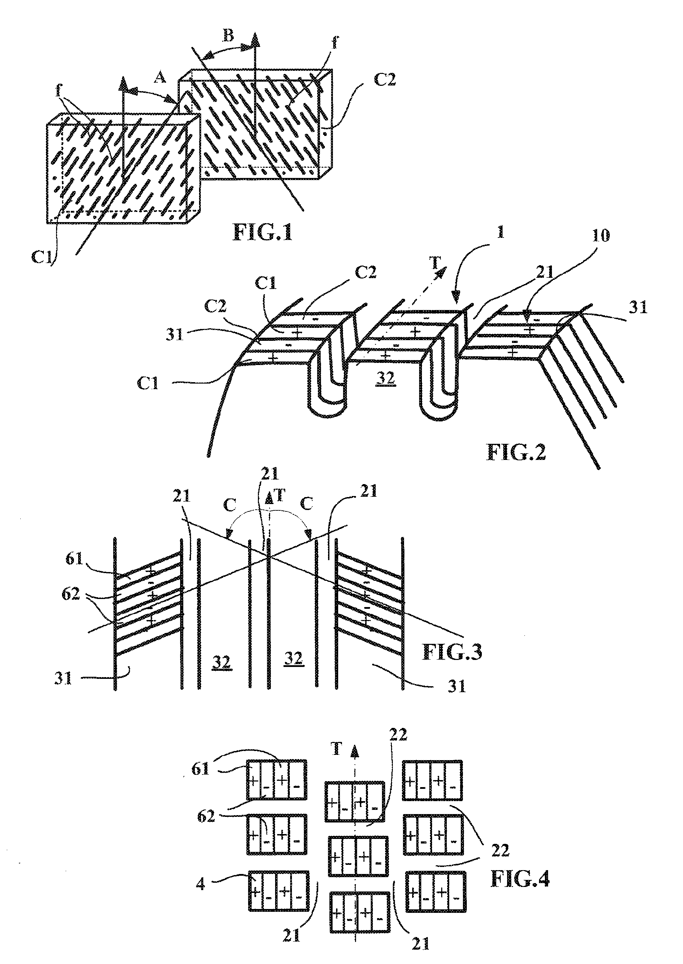

Sur la figure 1, on a représenté deux couches successives C1, C2 de matériau caoutchoutique renforcé par des courtes fibres f orientées dans chaque couche selon un angle positif A, dite couche (+) ou selon un angle négatif B, dite couche (-). Par orientation des fibres courtes dans chaque couche C1, C2, il faut bien sûr comprendre qu'en moyenne toutes ou quasiment toutes les fibres f d'une couche sont orientées selon un même angle moyen A ou B, cet angle étant repéré par rapport à une direction principale de la couche (cette direction correspondant une fois en place dans une bande de roulement à la direction radiale). Selon le procédé de fabrication choisi pour réaliser de telles couches, il est possible qu'un certain nombre de courtes fibres de renforcement présentent une orientation différente de l'orientation moyenne desdites fibres dans la couche. L'angle d'orientation des fibres est pris par rapport à une direction qui sur la bande de roulement correspond à une direction radiale, c'est-à-dire une direction perpendiculaire à l'axe de rotation du pneu pourvu de ladite bande.

La figure 2 montre une variante de réalisation d'un pneu selon l'invention. Ce pneu pour véhicule poids lourd comprend une bande de roulement 1 ayant une surface de roulement 10 formée par les surfaces radialement à l'extérieur des différents éléments en relief dont est pourvue ladite bande. Dans le cas présenté, la bande de roulement est pourvue de deux rainures circonférentielles 21, ces rainures 21 délimitant une nervure intermédiaire 32 et deux nervures de bord 31, ces nervures étant continues circonférentiellement. La bande de roulement est formée dans un matériau composite comprenant un très grand nombre de couches C1, C2 empilées les unes contre les autres, chaque couche étant soit une couche ayant des courtes fibres de renforcement orientées selon un angle A (couche +) ou une couche ayant des fibres courtes orientées selon un angle B (couche -). Les couches sont empilées les unes contre les autres de manière à ce que les courtes fibres de renforcement de chaque couche soient croisées entre elles et à ce que l'empilement des couches soit fait dans la direction circonférentielle (indiquée par la flèche T sur la figure).

Chaque couche comprend un matériau caoutchoutique dans lequel on noie une pluralité de fibres courtes en PET de longueur égale à 3 mm et de diamètre égal à 12 µm la densité en fibres de chaque couche est de 2% en poids. La fibre aramide a également été testée. Dans le cas présent, toutes les fibres courtes sont de même nature et de même orientation en valeur absolue dans chaque couche C1, C2. Les rainures de ce pneu ont des profondeurs à l'état neuf supérieures à la longueur moyenne des courtes fibres de renforcement (en règle générale, les profondeurs des rainures de pneus pour poids lourd sont au moins égales à 10 mm).

La figure 3 montre une variante de l'invention selon laquelle, une bande de roulement comprend trois rainures circonférentielles délimitant des nervures intermédiaires 32 et des nervures de bord 31. Ces dernières sont situées axialement au bord de la bande de roulement et elles sont formées dans un matériau composite tel que défini par l'invention. En outre, les couches (+) et les couches (-) sont disposées de manière à faire sur la surface de roulement un angle C avec une direction tangente à la direction circonférentielle (figurée par la flèche T sur la figure 2). Dans l'exemple montré, cet angle C est, au signe près, le même sur les deux bords et égal à 30°. Dans ce cas, la bande de roulement acquiert une sorte de directionalité par la disposition des couches de matériaux renforcées par de courtes fibres. Dans l'exemple montré, les deux rangées intermédiaires entre les rangées bord sont formées dans des matériaux homogènes non renforcés par des courtes fibres. Cette variante permet de renforcer de façon spécifique les bords de la bande de roulement contre les agressions auxquelles peuvent être soumis les pneus pour véhicules poids lourd.

Bien entendu, la personne du métier peut adapter les angles sur chacun des bords pour, par exemple, tenir compte de la position du pneu sur le véhicule (on peut ainsi tenir compte du bord extérieur du pneu par rapport au véhicule, le bord intérieur correspondant au bord du pneu faisant face au véhicule au moment du montage dudit pneu sur ledit véhicule).

La figure 4 montre une autre variante de pneu selon l'invention pour lequel sa bande de roulement comprend une pluralité de blocs 4 délimités par des rainures circonférentielles 21 et transversales 22. Chaque bloc 4 est formé d'un matériau composite résultant de l'empilement dans la direction transversale de couches C1, C2 renforcées de courtes fibres de renforcement, ces couches étant empilées les unes contre les autres, de manière à alterner les couches ayant des courtes fibres orientées selon un angle positif (+) et les couches ayant des fibres courtes orientées selon un angle négatif (-).

Dans une variante non montrée, certains blocs peuvent être formés par un empilement de même direction que celui montré avec la figure 3 et les autres selon un empilement de direction telle que montré avec la figure 4.

Les exemples décrits ici montrent des fines couches diposées les unes contre les autres dans une direction radiale, c'est-à-dire non inclinées par rapport à une direction perpendiculaire à l'axe de rotation du pneu. Bien entendu l'invention recouvre les variantes selon lesquelles ces fines couches peuvent présenter une faible inclinaison différente de zéro avec une direction radiale pour générer par exemple un effet directionnel.

L'invention n'est pas limitée aux exemples décrits et représentés et diverses modifications peuvent y être apportées sans sortir de son cadre. Son application peut être aussi envisagée de façon équivalente au domaine des pneus de type camionnette ou de type tourisme ayant à subir de fortes sollicitations pouvant agresser les bords des leurs bandes de roulement. Une application est équivalente si la longueur des courtes fibres de renforcement choisies est en proportion de l'épaisseur de la bande de roulement.

## Revendications

1. Bande de roulement (1) de pneumatique pourvue d'une surface de roulement (10) destinée à être en contact avec une chaussée, cette bande de roulement comportant une sculpture formée par des éléments de relief délimitant au moins deux rainures (21) d'orientation générale circonférentielle, cette bande de roulement étant formée au moins en partie dans un matériau composite constituée d'une pluralité de fines couches de caoutchouc comprenant chacune de courtes fibres (f) de renforcement parallèles entre elles et orientées unidirectionnellement dans la bande de roulement selon un angle (A, B) différent de zéro degré avec une direction contenue dans la fine couche et perpendiculaire à la surface de roulement, cette bande de roulement étant **caractérisée en ce que** d'une couche de caoutchouc à la suivante les courtes fibres (f) sont croisées entre elles.

2. Bande de roulement selon la revendication 1, **caractérisée en ce qu'**elle comprend une partie centrale et de part et d'autre des parties de bord et **en ce que** seuls les éléments en relief des parties de bord sont formés d'une pluralité de fines couches de gomme comprenant chacune de courtes fibres de renforcement parallèles entre elles et orientées unidirectionnellement dans la bande de roulement selon un angle différent de zéro degré avec une direction contenue dans la fine couche et perpendiculaire à la surface de roulement, et **en ce que** d'une couche de caoutchouc à la suivante les courtes fibres de renforcement sont croisées entre elles.

3. Bande de roulement selon la revendication 1, **caractérisée en ce qu'**elle comprend une partie centrale et de part et d'autre des parties de bord et **en ce que** les éléments en relief de la partie centrale et des parties de bord de la bande de roulement comportent de la gomme renforcée à l'aide des courtes fibres de renforcement selon une pluralité de fines couches croisées, les angles des courtes fibres de renforcement dans la partie centrale étant différents des angles des courtes fibres de renforcement dans les parties de bord.

4. Bande de roulement selon l'une des revendications 1 à 3, **caractérisée en ce que** les courtes fibres de renforcement sont croisées d'une couche à l'autre selon un angle symétrique par rapport à une direction radiale.

5. Bande de roulement selon l'une des revendications 1 à 4, **caractérisée en ce que** les courtes fibres de renforcement sont croisées d'une couche à l'autre selon un angle égal à ou voisin de + 45° et- 45°.

6. Bande de roulement selon l'une des revendications 1 à 3, **caractérisée en ce que** les courtes fibres de renforcement sont croisées d'une couche à l'autre de façon dissymétrique par rapport à une direction radiale.

7. Bande de roulement selon l'une des revendications 1 à 6, **caractérisée en ce que** les courtes fibres de renforcement sont choisies parmi les fibres végétales, coton, rayonne, cellulose, des fibres en polyamides aromatiques telles que des fibres en aramide, en polyamides aliphatiques telles que le nylon 46 et 66, en polyester, en polyéthylène téréphtalate (PET), en polyéthylène naphtalates (PEN), en polyimides, en polyvinyalcools, des fibres de carbone, des fibres de verre.

8. Bande de roulement selon l'une quelconque des revendications 1 à 7, **caractérisée en ce que** les courtes fibres de renforcement ont une longueur au plus égale à 10 mm.

9. Bande de roulement selon l'une quelconque des revendications 1 à 8, **caractérisée en ce que** les courtes fibres de renforcement ont une longueur au moins égale à 3 mm et au plus à 8 mm.

10. Bande de roulement selon l'une des revendications 8 ou 9, **caractérisée en ce que** les courtes fibres de renforcement ont un diamètre moyen de section alant de 0.2micron à 0.1 mm.

11. Bande de roulement selon l'une quelconque des revendications 1 à 10, **caractérisée en ce que** la teneur en courtes fibres de renforcement dans chaque couche est au moins égale à 0.1% et au plus à 45% en poids du caoutchouc de ladite couche.

12. Pneumatique pour véhicule poids lourd à armature de carcasse radiale, **caractérisé en ce qu'**il comprend une bande de roulement définie selon l'une quelconque des revendications 1 à 11

## Patentansprüche

1. Laufstreifen (1) eines Reifens, der mit einer Lauffläche (10) versehen ist, die dazu bestimmt ist, sich mit einer Fahrbahn im Kontakt zu befinden, wobei dieser Laufstreifen ein Profil aufweist, das von Reliefelementen gebildet wird, die mindestens zwei Rillen (21) mit einer allgemeinen Ausrichtung in Umfangsrichtung begrenzen, wobei dieser Laufstreifen wenigstens teilweise aus einem Verbundmaterial hergestellt ist, das aus mehreren dünnen Schichten Gummi besteht, die jeweils Verstärkungskurzfasern (f) aufweisen, die zueinander parallel sind und in dem Laufstreifen unidirektional gemäß einem von null Grad verschiedenen Winkel (A, B) mit einer in der dünnen Schicht enthaltenen und zu der Lauffläche senkrechten Richtung ausgerichtet sind, wobei dieser Laufstreifen **dadurch gekennzeichnet ist, dass** von einer Gummischicht zur folgenden die Kurzfasern (f) kreuzweise zueinander angeordnet sind.

2. Laufstreifen nach Anspruch 1, **dadurch gekennzeichnet, dass** er einen mittleren Teil und beiderseits davon Randteile aufweist, und dadurch, dass nur die Reliefelemente der Randteile von mehreren dünnen Schichten Gummi gebildet werden, die jeweils Verstärkungskurzfasern aufweisen, die zueinander parallel sind und in dem Laufstreifen unidirektional gemäß einem von null Grad verschiedenen Winkel mit einer in der dünnen Schicht enthaltenen und zu der Lauffläche senkrechten Richtung ausgerichtet sind, und dadurch, dass von einer Gummischicht zur folgenden die Verstärkungskurzfasern kreuzweise zueinander angeordnet sind.

3. Laufstreifen nach Anspruch 1, **dadurch gekennzeichnet, dass** er einen mittleren Teil und beiderseits davon Randteile aufweist, und dadurch, dass die Reliefelemente des mittleren Teils und der Randteile des Laufstreifens mithilfe von Verstärkungskurzfasern verstärkten Gummi in mehreren kreuzweise angeordneten dünnen Schichten aufweisen, wobei die Winkel der Verstärkungskurzfasern in dem mittleren Teil von den Winkeln der Verstärkungskurzfasern in den Randteilen verschieden sind.

4. Laufstreifen nach einem der Ansprüche 1 bis 3, **dadurch gekennzeichnet, dass** die Verstärkungskurzfasern von einer Schicht zur anderen kreuzweise gemäß einem Winkel angeordnet sind, der bezüglich einer radialen Richtung symmetrisch ist.

5. Laufstreifen nach einem der Ansprüche 1 bis 4, **dadurch gekennzeichnet, dass** die Verstärkungskurzfasern von einer Schicht zur anderen kreuzweise gemäß einem Winkel angeordnet sind, der gleich oder annähernd gleich +45° und -45° ist.

6. Laufstreifen nach einem der Ansprüche 1 bis 3, **dadurch gekennzeichnet, dass** die Verstärkungskurzfasern von einer Schicht zur anderen auf eine bezüglich einer radialen Richtung asymmetrische Weise kreuzweise angeordnet sind.

7. Laufstreifen nach einem der Ansprüche 1 bis 6, **dadurch gekennzeichnet, dass** die Verstärkungskurzfasern ausgewählt sind aus Pflanzenfasern, Baumwoll-, Kunstseide-, Zellulosefasern, Fasern aus aromatischen Polyamiden, wie Aramidfasern, aus aliphatischen Polyamiden, wie Nylon 46 und 66, aus Polyester, aus Polyethylenterephthalat (PET), aus Polyethylennaphthalaten (PEN), aus Polyimiden, aus Polyvinylalkoholen, Kohlefasern, Glasfasern.

8. Laufstreifen nach einem der Ansprüche 1 bis 7, **dadurch gekennzeichnet, dass** die Verstärkungskurzfasern eine Länge aufweisen, die höchstens 10 mm beträgt.

9. Laufstreifen nach einem der Ansprüche 1 bis 8, **dadurch gekennzeichnet, dass** die Verstärkungskurzfasern eine Länge aufweisen, die mindestens 3 mm und höchstes 8 mm beträgt.

10. Laufstreifen nach einem der Ansprüche 8 oder 9, **dadurch gekennzeichnet, dass** die Verstärkungskurzfasern einen mittleren Durchmesser des Querschnitts von 0,2 Mikrometern bis 0,1 mm aufweisen.

11. Laufstreifen nach einem der Ansprüche 1 bis 10, **dadurch gekennzeichnet, dass** der Gehalt an Verstärkungskurzfasern in jeder Schicht mindestens 0,1 und höchstens 45 Gewichts-% des Gummis der jeweiligen Schicht beträgt.

12. Luftreifen für einen Lastkraftwagen mit Radialkarkasse, **dadurch gekennzeichnet, dass** er einen Laufstreifen nach einem der Ansprüche 1 bis 11 aufweist.

## Claims

1. Tyre tread (1) provided with a tread surface (10) designed to be in contact with a roadway, this tread comprising a sculpture formed by raised elements delimiting at least two grooves (21) of generally circumferential orientation, this tread being formed at least partly in a composite material consisting of a plurality of thin layers of rubber each comprising short reinforcing fibres (f) that are parallel with one another and oriented in one direction in the tread at an angle (A, B) different from zero degree with a direction contained in the thin layer and perpendicular to the tread surface, this tread being **characterized in that** from one layer of rubber to the next the short fibres (f) are crossed.

2. Tread according to Claim 1, **characterized in that** it comprises a central portion and, on either side, edge portions, and **in that** only the raised elements of the edge portions are formed of a plurality of thin layers of gum each comprising short reinforcing fibres that are parallel with one another and oriented in one direction in the tread at an angle different from zero degree with a direction contained in the thin layer and perpendicular to the tread surface, and **in that** from one layer of rubber to the next the short reinforcing fibres are crossed.

3. Tread according to Claim 1, **characterized in that** it comprises a central portion and on either side edge portions and **in that** the raised elements of the central portion and the edge portions of the tread comprise gum reinforced with the aid of the short reinforcing fibres in a plurality of thin crossed layers, the angles of the short reinforcing fibres in the central portion being different from the angles of the short reinforcing fibres in the edge portions.

4. Tread according to one of Claims 1 to 3, **characterized in that** the short reinforcing fibres are crossed from one layer to the other at an angle that is symmetrical relative to a radial direction.

5. Tread according to one of Claims 1 to 4, **characterized in that** the short reinforcing fibres are crossed from one layer to the other at an angle equal to or close to +45° and -45°.

6. Tread according to one of Claims 1 to 3, **characterized in that** the short reinforcing fibres are crossed from one layer to the other in a manner that is dissymmetrical relative to a radial direction.

7. Tread according to one of Claims 1 to 6, **characterized in that** the short reinforcing fibres are chosen from the plant fibres, cotton, rayon, cellulose, fibres made of aromatic polyamides such as fibres made of aramide, of aliphatic polyamides such as nylon 46 and 66, of polyester, of polyethylene terephthalate (PET), of polyethylene naphthalates (PEN), of polyimides, of polyvinyl alcohols, carbon fibres and glass fibres.

8. Tread according to any one of Claims 1 to 7, **characterized in that** the short reinforcing fibres have a length at most equal to 10 mm.

9. Tread according to any one of Claims 1 to 8, **characterized in that** the short reinforcing fibres have a length at least equal to 3 mm and at most to 8 mm.

10. Tread according to one of Claims 8 and 9, **characterized in that** the short reinforcing fibres have an average sectional diameter ranging from 0.2 micron to 0.1 mm.

11. Tread according to any one of Claims 1 to 10, **characterized in that** the content of short reinforcing fibres in each layer is at least equal to 0.1% and at most to 45% by weight of the rubber of the said layer.

12. Tyre for heavy goods vehicle with radial carcass reinforcement, **characterized in that** it comprises a tread defined according to any one of Claims 1 to 11.
